# EUROPÄISCHE PATENTANMELDUNG

(11) **EP 4 029 646 A1**
(43) Veröffentlichungstag der Anmeldung: **20.07.2022**
(21) Anmeldenummer: 22150236.2
(22) Anmeldetag: 04.01.2022
(51) Int. Cl.: B23Q 1/00

(54) **SPANNPLATTE**

(30) Priorität: 19.01.2021 DE 102021100951
(71) Anmelder: Lang Technik GmbH, 73271 Holzmaden (DE)
(72) Erfinder: Lang, Günter, 73249 Wernau (DE); Lang, Philipp, 73271 Holzmaden (DE)
(74) Vertreter: Rüger Abel Patentanwälte PartGmbB

(57) **Zusammenfassung**

Die erfindungsgemäße Spannplatte (12) weist eine Festzieheinrichtung (28) auf, die ein Keilgetriebe umfasst. Zu diesem gehört als Antrieb für Spannschieber (23 bis 26) ein Keil (31), der in der Spannplatte (12) an zwei Gleitflächen (33, 34) seitlich geführt und abgestützt ist. Die Gleitflächen (33, 34) dienen dabei dazu, bei unsymmetrischer Belastung der Festzieheinrichtung (28) auf den Keil (31) einwirkende Seitenkräfte aufzunehmen und abzuleiten.

Dieses Konzept ermöglicht einen flexibleren Einsatz der Spannplatten (12).

## Beschreibung

Die Erfindung betrifft eine Einrichtung zur Aufnahme einer Werkstückspanneinrichtung. Insbesondere betrifft die Erfindung eine Einrichtung zur Aufnahme einer Werkstückspanneinrichtung mit mehreren Spann- und Positionierbolzen, die an einer Basisfläche der Werkstückspanneinrichtung angeordnet sind und parallel zueinander von der Basisfläche weg ragen.

Zur Bearbeitung, beispielsweise zur spanenden oder anderweitigen Bearbeitung, werden Werkstücke häufig von Spanneinrichtungen in Form von Spannstöcken aufgenommen, die das Werkstück beispielsweise zwischen zwei gegeneinander beweglichen Backen klemmend aufnehmen. Solche Spannstöcke oder ähnliche Spanneinrichtungen müssen ihrerseits positionsgenau in einer Werkzeugmaschine aufgenommen und gespannt werden. Dazu offenbart die DE 101 55 077 B4 eine Einrichtung mit einer Spannplatte, die auch als "Bezugsebenenplatte" bezeichnet wird. Diese Platte weist Öffnung auf, in die Spann- und Positionierbolzen einführbar sind, die von der Basisfläche eines Spannstocks weg ragen. In der Spannplatte ist eine Festzieheinrichtung angeordnet, mittels derer die Spann- und Positionierbolzen in den Öffnungen fixiert werden können. Die Spann- und Positionierbolzen werden dabei sowohl axial in die Öffnungen gezogen wie auch gegen die Öffnungswand gedrückt, um dort eine präzise Anlage zu finden.

Auch aus der US 5,167,405 ist eine Werkstückspanneinrichtung und eine zugehörige Spannplatte bekannt, die Schieber zum Festziehen von Spannbolzen der Werkstückspanneinrichtung aufweist. Eine zentrale Exzenterwelle dient dazu, die Schieber zwischen Spann- und Freigabestellung hin und her zu bewegen. Zur genauen Positionierung sin zusätzlich zu den Spannbolzen Passstifte vorgesehen.

Die DE 10 2017 122 112 A1 offenbart eine Werkstückspanneinrichtung, die mindestens zwei Linearführungen umfasst, die jeweils nur einen Spannbacken tragen. Die beiden Spannbacken stehen mit einer Gewindespindel in Eingriff, die mittig in einer Lagereinrichtung gefasst ist. Die beiden Linearführungen und die Lagereinrichtung sind wiederum auf einer Spannplatte befestigt.

Bei der Befestigung der Werkstückspaneinrichtung auf einer Spannplatte kommt es darauf an, die Spanneinrichtung präzise in einer genau festgelegten Position zu fixieren, die auch als Nullposition bezeichnet wird. Dazu nutzt die US 5,167,405 Positionierstifte, die die Position der Werkstückspanneinrichtung auf der Spannplatte genau festlegen. Hingegen nutzt die Vorrichtung nach DE 101 55 077 B4 dazu die radial geringfügig federnden Spann- und Positionierbolzen, die durch die Spannschieber gespreizt und dabei gegen die Bohrungswand gedrängt werden. Die Werkstückspanneinrichtung findet dabei ihre Sollposition, d.h. ihren "Nullpunkt" in der Mitte zwischen den von ihr genutzten Öffnungen. In dieser Mitte wird sie durch die als harte Federn wirkenden Spann- und Positionierbolzen gehalten. Dies setzt voraus, dass alle Spann- und Positionierbolzen möglichst gleichzeitig gespannt werden. Auch setzt dies voraus, dass in jeder der Festzieheinrichtung zugeordneten Öffnung je ein Spann- und Positionierbolzen angeordnet ist, so dass alle Spannschieber Last übernehmen.

Davon ausgehend ist es Aufgabe der Erfindung, eine Einrichtung zur Aufnahme einer Werkstückspanneinrichtung zu schaffen, mit der sich eine höhere Flexibilität oder auch eine besonders hohe Positioniergenauigkeit erzielen lässt.

Diese Aufgabe wird mit der Einrichtung nach Anspruch 1 gelöst:
Die erfindungsgemäße Einrichtung umfasst eine Spannplatte mit einer ebenen Oberseite, die von mehreren Öffnungen zur Aufnahme von Spann- und Positionierbolzen der Einrichtung durchsetzt ist. In der Spannplatte ist eine Festzieheinrichtung angeordnet, die von einer axial verschiebbar gelagerten Betätigungsstange angetrieben ist. Die Betätigungsstange steht mit mindestens zwei Spannschiebern in Antriebsverbindung und weist dazu einen Keil auf. Dieser ist vorzugsweise als von der Betätigungsstange gesondertes Teil ausgebildet, das mit der Betätigungsstange in Antriebsverbindung steht und in der Spannplatte linear geführt ist. Er kann aber auch auf der Betätigungsstange fest angeordnet sein. Z.B. kann er integraler Bestandteil derselben oder mit dieser fest verbunden sein.

Grundsätzlich bedeutet die Führung des Keils in der Spannplatte, dass der Keil bezüglich der Längsrichtung der Betätigungsstange antriebsmäßig mit dieser verbunden ist. Dagegen werden auf den Keil einwirkende Seitenkräfte nicht von der Betätigungsstange, sondern von der Spannplatte bzw. an der Spannplatte vorgesehenen Führungsflächen aufgenommen. Durch diese Maßnahme lässt sich der Keil unabhängig von etwaigem seitlichem Spiel der Betätigungsstange präzise führen, womit sichergestellt ist, dass alle Spannschieber der Spannplatte synchron laufen. Dies gilt auch, wenn nicht in allen Öffnungen Spann- und Positionierbolzen sitzen, weil beispielsweise bei einem mehrere Spannplatten umfassenden Spannfeld nur Öffnungen, beispielsweise auf einer Seite einer Betätigungsstange mit Spann- und Positionierbolzen besetzt sind.

Bei der erfindungsgemäßen Einrichtung steht die Betätigungsstange mit den Spannschiebern in Antriebsverbindung. Dazu dient vorzugsweise ein Keil, bei dem der Kraftweg an dem von der Betätigungsstange getragenen Keil beginnt und an den Spannschiebern endet. Zwischen den Spannschiebern und dem Keil können bei einer bevorzugten Ausführungsform weitere Elemente, z.B. Schieber, angeordnet sein, die mit dem Keil in Anlage stehen. Der Keil drängt dabei bei Betätigung der Festzieheinrichtung die beiden Schieber auseinander. Jeder Schieber kann dann z.B. mittels einer keilförmigen Nase wiederum die Spannschieber auseinander drängen.

Das so gebildete Keilgetriebe ist vorzugsweise ein Untersetzungsgetriebe. Das Keilgetriebe kann die Spannschieber und den Keil sowie bedarfsweise gegebenenfalls auch noch dazwischen angeordnete Schieber umfassen. Der Bewegungshub der Betätigungsstange ist dabei größer als die resultierende Betätigung der Spannschieber. Der Keil weist vorzugsweise Keilflächen auf, die miteinander einen Winkel vorzugsweise einen spitzen Winkel einschließen. Ist zur Vermittlung der Spannbewegung vom Keil aufeinander benachbarte Spannschieber ein dazwischen angeordneter Schieber vorgesehen, weist dieser an seiner keilförmigen Nase vorzugsweise einen rechten oder einen spitzen Winkel auf.

Der Keil ist in der Spannplatte vorzugsweise mit einem geringen seitlichen Spiel geführt. Vorzugsweise ist dieses insbesondere geringer als die Summe aus dem seitlichen Spiel der Betätigungsstange in der Spannplatte und dem seitlichen Spiel des Keils auf der Betätigungsstange (falls vorhanden). Dadurch ist sichergestellt, dass die vom Keil bei asymmetrischer (einseitiger) Belastung der Festzieheinrichtung aufzunehmenden seitlich zur Betätigungsstange wirkenden Kräfte direkt in die Spannplatte eingeleitet und von der Betätigungsstange ferngehalten werden.

Weiter ist es vorteilhaft, wenn jedem Schieber zwei gegensinnig arbeitende Spannschieber zugeordnet sind, die weiter vorzugsweise in einem stumpfen Winkel zueinander angeordnet sind, der kleiner als 180° ist.

Weitere Merkmale vorteilhafter Ausführungsformen der Erfindung ergeben sich aus der Zeichnung oder der Beschreibung oder Ansprüchen. Es zeigen:
Figur 1 eine Werkstückspanneinrichtung und eine zugehörige Spannplatte, in perspektivischer vereinfachter Darstellung,
Figur 2 die Werkstückspanneinrichtung und die Spannplatte, in perspektivischer vereinfachter Darstellung,
Figur 3 eine erfindungsgemäße Einrichtung, einschließlich deren Festzieheinrichtung, in schematisierter Horizontalschnittdarstellung,
Figur 4 die Festzieheinrichtung nach Figur 3 in vergrößerter ausschnittsweiser Darstellung,
Figur 5 einen zu der Festzieheinrichtung nach Figur 4 gehörigen Keil in Draufsicht,
Figur 6 ein Spannfeld mit mehreren Einrichtungen gemäß Figur 1 mit aneinander gekoppelten Betätigungseinrichtungen,
Figur 7 eine abgewandelte Ausführungsform der Einrichtung nach Figur 1,
Figur 8 die Einrichtung nach Figur 3 mit verlängerter Betätigungsstange und
Figur 9 ein Spannfeld mit einer Einrichtung nach Figur 3 und einer Einrichtung nach Figur 6.

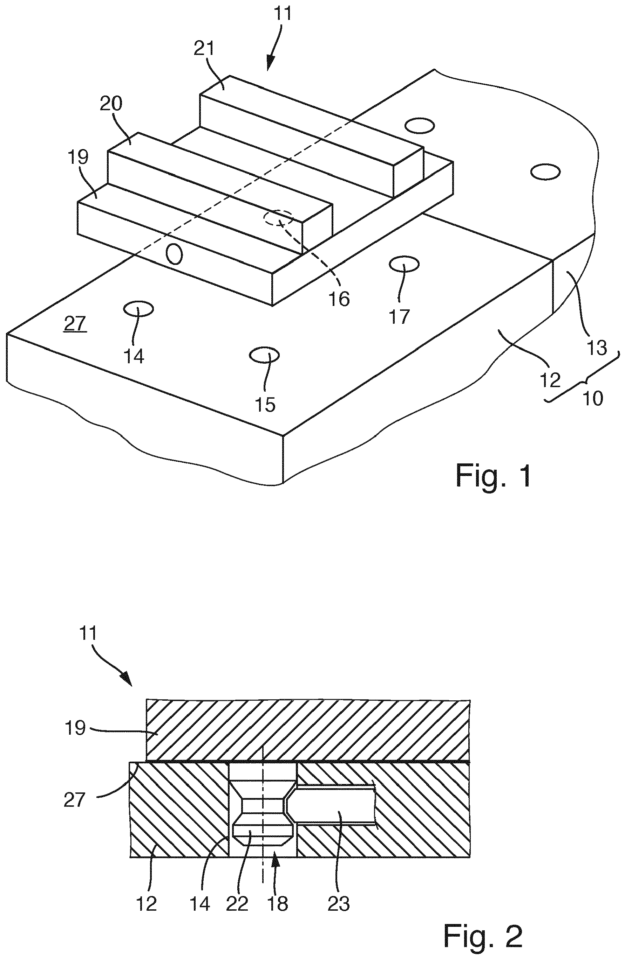

Figur 1 veranschaulicht eine Einrichtung 10 zur Aufnahme einer Werkstückspanneinrichtung 11. Zu der Einrichtung 10 gehört mindestens eine Spannplatte 12 sowie gegebenenfalls weitere Spannplatten wie zum Beispiel die Spannplatte 13, die in einer Werkzeugmaschine angeordnet sein können und ein Spannfeld bilden. Die nachfolgende Beschreibung der Spannplatte 12 gilt für die Spannplatte 13 entsprechend.

Die Spannplatte 12 weist mehrere Öffnungen 14, 15, 16, 17 auf, die zur Aufnahme von Spannbolzen der Werkstückspanneinrichtung 11 dienen. Dazu ist in Figur 2 beispielhaft ein Spannbolzen 18 veranschaulicht, der in eine der Öffnungen, hier die Öffnung 14 greift. Entsprechende weitere solcher Spannbolzen sind an der Unterseite (d.h. der Basisfläche) des Führungskörpers 19 der Werkstückspanneinrichtung 11 vorgesehen und greifen in die anderen Öffnungen 15, 16, 17.

An dem Führungskörper 19 ist mindestens ein oder sind auch zwei Spannbacken 20, 21 beweglich gelagert. Sie können mittels einer Gewindespindel aufeinander zu und voneinander weg bewegt werden. Die Anordnung der an der Unterseite des Führungskörpers 19 angeordneten Spannbolzen stimmt mit der Anordnung der Öffnungen 14 bis 17 überein.

Wie aus Figur 2 hervorgeht, weist jeder Spannbolzen 18 ausgehend von einer runden etwa zylindrische Grundform eine ringsum laufende Nut, beispielsweise eine Trapeznut, auf, an die sich ein Kopf 22 anschließt. Der Kopf 22 kann durch eine erhebliche radial wirkende Kraft seitlich federnd ausgelenkt und an die Wandung der Bohrung 14 (oder entsprechend 15 bis 17) angelegt werden, die somit als Bezugsfläche dient. Dazu kann ein Spannschiebern 23 dienen, der in der Spannplatte 12 angeordnet und dazu radial in die Bohrung 14 hinein oder zur Freigabe aus der Öffnung 14 heraus beweget werden kann.

Die an dem Spann- und Positionierbolzen 18 vorgesehene Nut ist vorzugsweise eine Trapeznut, sodass eine entsprechend geformte Nase des Spannschiebers 23 eine Kraft auf den Kopf 22 ausübt, die sowohl eine in Figur 2 vertikal nach unten gerichtete Axialkomponente als auch eine in Figur 2 horizontal nach links gerichtete Radialkomponente aufweist. Zwei Spannschieber 23/25 und 24/26 schließen jeweils paarweise miteinander einen stumpfen Winkel ein. Die stumpfen Winkel öffnen sich in entgegengesetzten Richtungen, die vorzugsweise quer zu der Axialrichtung 32 der Betätigungsstange 30 orientiert sind. Die Spannschieber 23/24 und 25/26 schließen jeweils paarweise miteinander einen spitzen Winkel ein. Die spitzen Winkel öffnen sich in entgegengesetzten Richtungen, die vorzugsweise längs zu der Axialrichtung 32 der Betätigungsstange 30 orientiert sind. Die Öffnungen 14, 15, 16, 17 sind vorzugsweise an den Ecken eines Quadrats angeordnet. Durch diese Anordnung ergibt sich eine sichere und präzise Positionierung der Werkstückspanneinrichtung 11.

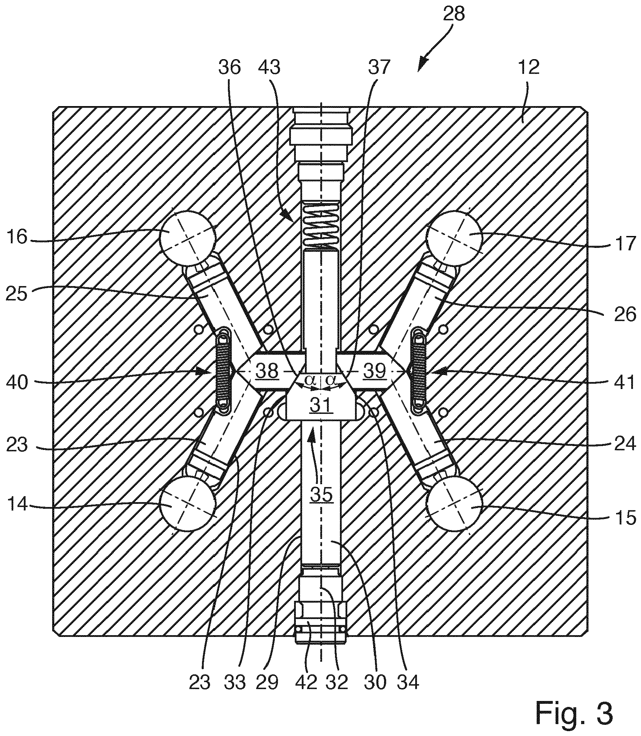

Der Spannschieber 23 bewirkt damit zusammen mit den anderen aus Figur 3 ersichtlichen Spannschiebern 24 bis 26 sowohl ein Spreizen der Spannbolzen 18 als auch ein Heranziehen des Führungskörpers 19 an die Oberseite 27 der Spannplatte 12. Die Oberseite 27 bildet somit zugleich eine Bezugsebene zur Festlegung der Höhenposition der Werkstückspanneinrichtung 11 weswegen die Spannplatte 12 auch als Spannplatte bezeichnet wird.

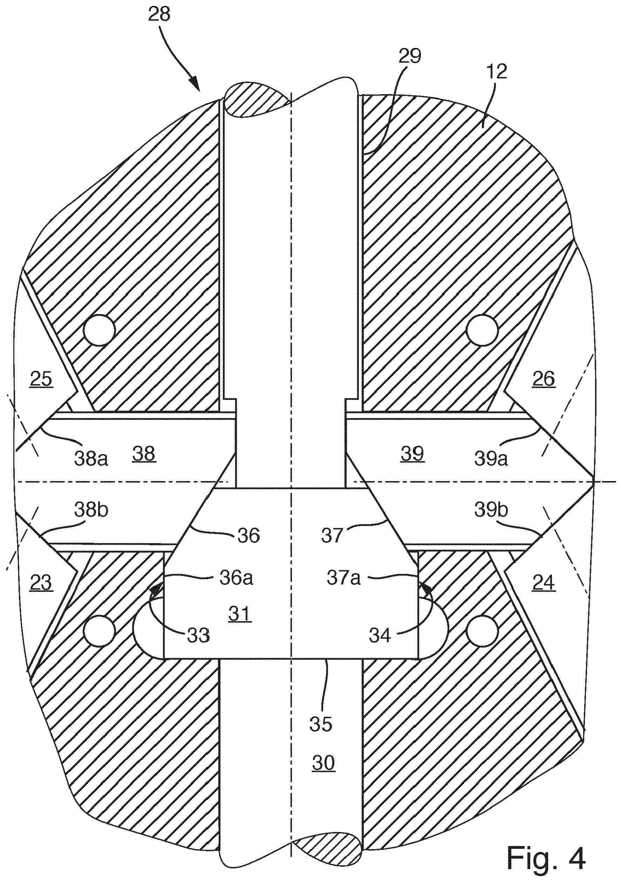

Die Spannschieber 23 bis 26 sind Teil einer Festzieheinrichtung 28, die gesondert in Figur 3 und vergrößert ausschnittsweise in Figur 4 veranschaulicht ist. Zu ihr gehört eine in der Spannplatte 12 parallel zu der Oberseite 27 in einer entsprechenden Bohrung 29 axial verschiebbar gelagerte Betätigungsstange 30, die in der Bohrung 29 mit einigem seitlichen Spiel axial verschiebbar gelagert ist. Die Betätigungsstange 30 ist ein gerader Stab mit rundem oder polygonalem Querschnitt. Auf der Betätigungsstange 30 ist ein Keil 31 angeordnet, der in der Spannplatte 12 in Axialrichtung 32 der Betätigungsstange 30 verschiebbar geführt ist. Dazu weist die Spannplatte 12 zwei einander gegenüber liegend angeordnete Gleitflächen 33, 34 auf, die parallel zueinander orientiert sind und zwischen denen der Keil 31 mit geringem seitlichen Spiel gehalten ist.

Um die Betätigungsstange 30 und mit diese den Keil 31 axial bewegen zu können, ist an der Betätigungsstange 30 eine Mitnahmeschulter 35 ausgebildet, an der sich der Keil 31 abstützt. Der Keil 31 kann dazu eine U-förmige Ausnehmung haben und die Betätigungsstange 30 mit zwei Schenkeln übergreifen, die an der Mitnahmeschulter 35 anliegen. Andere Verbindungen zwischen dem Keil 31 und der Betätigungsstange 30 können vorgesehen sein. Insbesondere werden Verbindungsmittel in Betracht gezogen, die ein seitliches Spiel des Keils 31 auf der Betätigungsstange 30 zulassen.

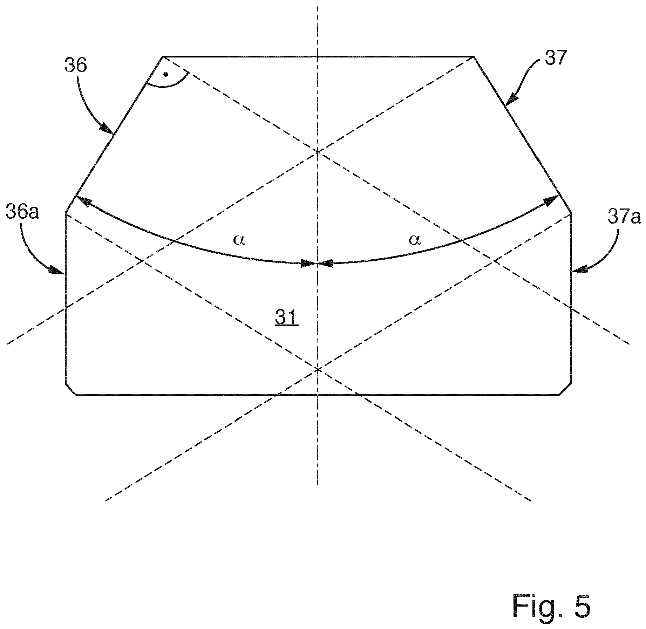

Der in Figur 5 gesondert dargestellte Keil 31 weist zwei mit der Axialrichtung 32 jeweils einen spitzen Winkel α einschließende Keilflächen 36, 37 auf, die an zueinander parallel orientierte Lagerflächen 36a, 37a anschließen. Der Winkel α ist vorzugsweise höchstens 45° oder kleiner als 45°. Die Lagerflächen 36a, 37a stehen seitlich über die Betätigungsstange 30 über und sind parallel zueinander orientiert. Vorzugsweise sind sowohl die Keilflächen 36, 37 wie auch die Lagerflächen 36a, 37a ebene Flächen. Zumindest vorzugsweise befindet sich die Lagerfläche 37a wenigstens mit einem Abschnitt innerhalb der Projektion der Keilfläche 36, wie in Figur 5 gestrichelt angedeutet. Anders ausgedrückt, die Lagerfläche 37a ragt in einen aus Figur 5 ersichtlichen Bereich zwischen zwei gestrichelt dargestellten Flächennormalen, die auf den beiden Enden der Keilfläche 36 stehen. Entsprechendes gilt für die Keilfläche 37 und die Lagerfläche 36a.

An den Keilflächen 36, 37 liegen, wie die Figuren 3 und 4 zeigen, radial zu der Betätigungsstange 30 orientierte Schieber 38, 39 mit entsprechend schräg gestellten Endflächen an. Die Endflächen schließen dabei genau wie die Keilflächen 36, 37 miteinander den Winkel 2α ein, der gleich dem Zweifachen des Winkels α ist. Der Winkel 2α ist vorzugsweise ein spitzer Winkel.

Die auf einer gemeinsamen Linie liegenden Schieber 38, 39 haben vorzugsweise keilförmige Nasen, mit denen sie an Endflächen der Spannschieber 23 bis 26 anliegen. Die Spannschieber 23 bis 26 sind wiederum durch Federmittel 40, 41, z.B. Zugfedern, aufeinander zu gespannt, sodass ihre anderen Enden jeweils radial aus den entsprechenden Öffnungen 14 bis 16 herausgezogen sind. In dieser Position können jeweils zwei Spannschieber 23/25 und 24/26 mit einer Ecke aneinander anliegen. Die Spitze der Schieber 38, 39 kann diese Ecken jeweils berühren. Sind die betreffenden Ecken der Spannschieber 23/25 und 24/26 in Anlage, drängen sie die Schieber 38, 39 nicht weiter zu dem Keil hin.

Werden die Schieber 38, 39 von dem Keil 31 auseinander gedrängt, bewegen sich die Spannschieber 23 bis 26 in die Öffnungen 14 bis 17 hinein. Damit können die Spannschieber 23 bis 26 aus der in Figur 3 veranschaulichten Ruhestellung heraus, in der sie außerhalb der Öffnungen 14 bis 17 stehen, radial in diese hinein bewegt werden.

Zur Bewegung der Betätigungsstange 30 kann eine Schraube 42 genutzt werden, die in ein Ende der Öffnung 29 eingeschraubt ist. Mit ihrer Hilfe kann die Betätigungsstange 30 gegen die Kraft einer in das gegenüber liegende Ende der Bohrung 29 eingesetzten und dort arretierten Druckfeder 43 axial bewegt werden. Dabei drängt der Keil 31 die Schieber 38 und 39 auseinander, welche wiederum paarweise die Spannschieber 23, 25 sowie 24, 26 auseinander drängen. Anstelle der Schraube 42 kann euch eine andere Stelleinrichtung, z.B. ein Keil, ein Exzenter, ein Hydraulikzylinder, ein Pneumatikzylinder, ein Motorantrieb, ein Magnetantrieb oder dergleichen Verwendung finden. Ebenso kann anstelle der Druckfeder 43 ein anderes Krafterzeugungsmittel genutzt werden.

Vorzugsweise sind die Winkel α beide jeweils gleich groß und geringer als 45°. Außerdem sind die Keilnasen an den außen liegenden Enden der beiden Schieber 38, 39 beide jeweils vorzugsweise mit Druckflächen 38a, 38b, 39a, 39b versehen (Figur 4), die paarweise in einem rechten oder in einem spitzen Winkel zueinander stehen. Die Festzieheinrichtung 28 enthält somit ein Keilgetriebe, das als Untersetzungsgetriebe ausgebildet ist. Dies bedeutet, dass es dazu eingerichtet ist, einen Betätigungshub der Betätigungsstange 30 in einen kürzeren Hub der Spannschieber 23, 24, 25, 26 umzusetzen.

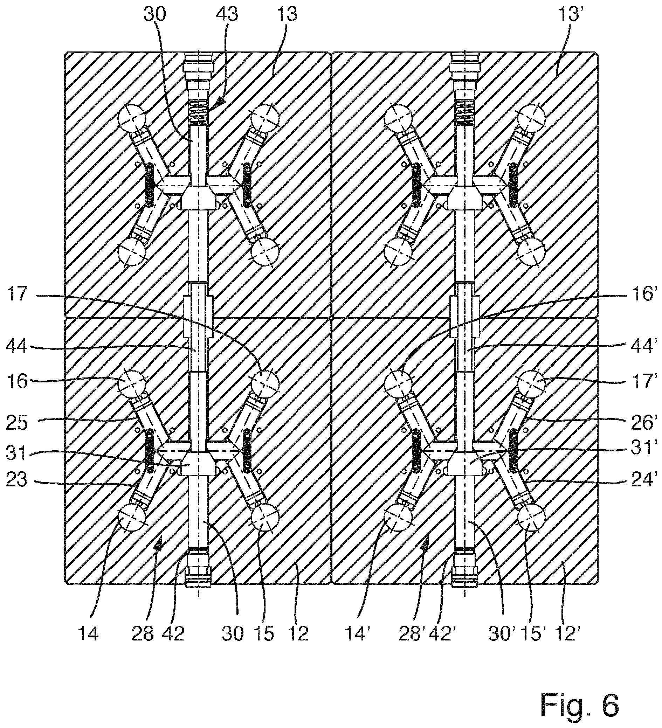

Der Keil 31 ist zwischen den Gleitflächen 33, 34 mit geringem seitlichen Spiel gehalten. Das Spiel der Betätigungsstange 30 in der Bohrung 29 und/oder das seitliche Spiel des Keils 31 auf der Betätigungsstange 30 ist jedoch vorzugsweise größer als dieses Spiel. Insbesondere ist es vorteilhaft, wenn die Summe aus dem Seitenspiel der Betätigungsstange 30 in der Bohrung 29 und dem Seitenspiel des Keils 31 auf der Betätigungsstange 30 größer als das Seitenspiel des Keils 31 zwischen den Gleitflächen 33, 34. Dadurch wird erreicht, dass von dem Keil 31 keine Querkräfte auf die Betätigungsstange 30 übertragbar sind. Dies hat insbesondere bei nicht symmetrischer Belastung der Festzieheinrichtung 28 Bedeutung. Es wird dazu auf Figur 6 verwiesen. Es ist dort ein Spannfeld bestehend aus den Spannplatten 12, 12', 13, 13' veranschaulicht. Die in Bezug auf die Figuren 1 bis 3 vorliegende Beschreibung der Spannplatte 12 gilt für die Spannplatte 12 nach Figur 6 entsprechend, jedoch mit der Maßgabe, dass anstelle der Druckfeder 33 ein Druckstück 44 vorgesehen ist. Für die Spannplatte 13 gilt die zuvor im Zusammenhang mit den Figur 1 bis 3 gegebene Beschreibung der Spannplatte 12 wiederum entsprechend, jedoch mit dem Unterschied, dass anstelle der Schraube 42 das Druckstück 44 vorgesehen ist. Somit bilden die Betätigungsstangen 30 der beiden Spannplatten 12, 13 zusammen mit dem Druckstück 14 eine unterteilte Betätigungsstange, die zwischen der Schraube 42 und der Druckfeder 43 gehalten ist. Hinsichtlich Aufbau und Funktion sind die Spannplatten 12, 13 ansonsten identisch. Entsprechendes gilt für die Spannplatten 12', 13' und dass sie aneinander koppelnde Druckstück 44'. Gleiche Bezugszeichen bezeichnen bauund/oder funktionsgleiche Teile, wobei die Bezugszeichen der Spannplatten 12' und 13' zur Unterscheidung der Teil der Spannplatten 12 und 13 jeweils mit einem Apostroph (') versehen sind.

Ein wesentlicher Vorteil der erfindungsgemäßen Spannplatten 12, 12', 13, 13' wird ersichtlich, wenn die Benutzung des so veranschaulichten Spannfelds mit variabler Bestückung betrachtet wird:

Zur Verdeutlichung werden in Figur 6 die Öffnungen 14 bis 17 der Spannplatte 12 und die Öffnungen 14' bis 17' der Spannplatte 12' betrachtet. Es wird nun angenommen, dass eine Werkstückspanneinrichtung 11 mit vier Spannbolzen 18 Spannplatten übergreifend eingesetzt wird. Werden die Spannbolzen beispielsweise in die Öffnungen 15, 14', 17, 16' eingesetzt und dann die entsprechenden Schrauben 42, 42' angezogen, sind beide Festzieheinrichtungen 28, 28' jeweils nur einseitig belastet. Der Keil 31 wird nach links und der Keil 31' nach rechts gedrängt. Dies liegt daran, dass die in die unbestückten Löcher 14, 16, 15', 17' fahrenden Spannschieber 23, 25 sowie 24', 26' keine Kraft auf den jeweiligen Keil 31, 31' ausüben. Die entsprechenden Querkräften werden von den Spannplatten 12, 12' direkt aufgenommen. Die Betätigungsstangen 30, 30' sind diesen Kräften nicht ausgesetzt.

Gleiches gilt, wenn eine Werkstückspanneinrichtung 11 alle vier Spannplatten 12, 12', 13, 13' übergreifend eingesetzt wird oder irgendeine andere Kombination von Öffnungen genutzt wird, in denen die Festzieheinrichtungen 28, 28' asymmetrischen Belastungen ausgesetzt sind. Auch kann sich eine asymmetrische Belastungssituation ergeben, wenn Werkstückspanneinrichtungen zum Einsatz kommen, bei denen die Anzahl der vorhandenen Spann- und Positionierbolzen nicht mit der Anzahl der von einer Festzieheinrichtung 28, 28' bedienten Öffnungen übereinstimmt. Dies ist bei Werkstückspanneinrichtungen mit nur einem oder nur zwei Spann- und Positionierbolzen der Fall. Auch können Werkstückspanneinrichtungen zum Einsatz kommen, deren Spannund Positionierbolzen z.B. in doppeltem Lochabstand zueinander angeordnet sind. Auch in solchen Fällen kommt es zu asymmetrischen Belastungen der Festzieheinrichtungen.

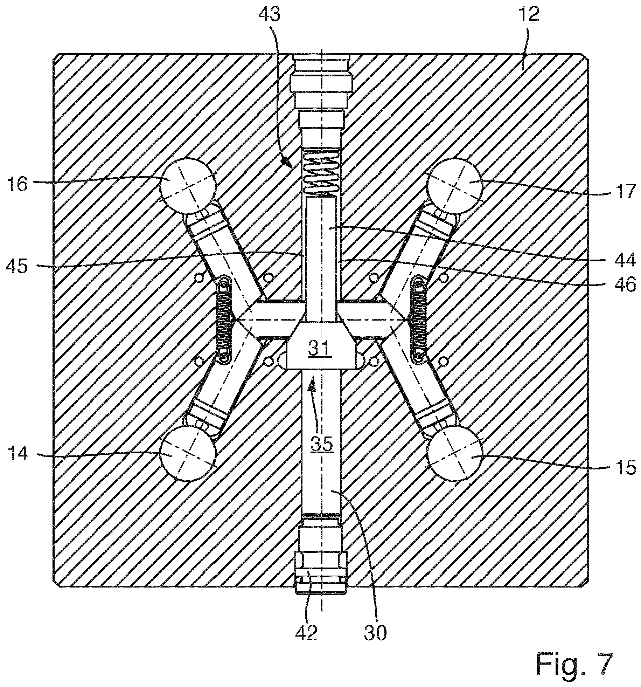

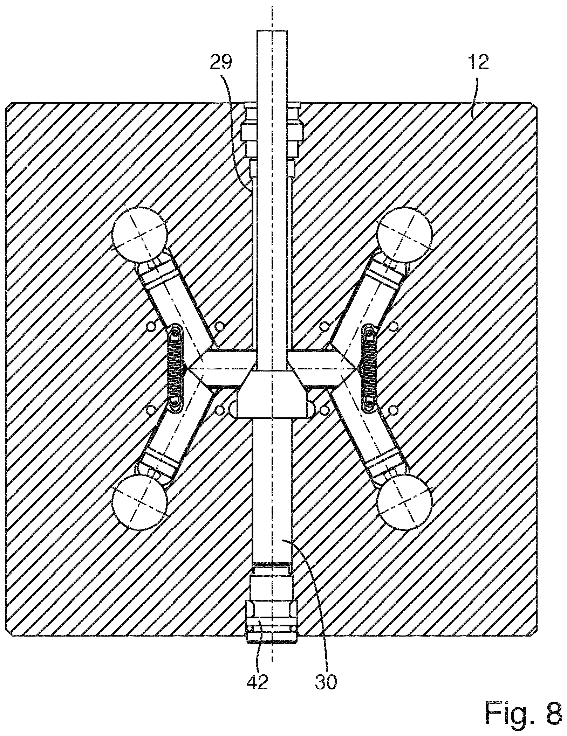

Figur 7 veranschaulicht eine Ausführungsvariante der Spannplatte 12, für die die vorige Beschreibung im Wesentlichen identisch unter Zugrundelegung der bereits eingeführten Bezugszeichen gilt. Jedoch ist die Betätigungsstange 30 abweichend von der vorigen Beschreibung ausgebildet. Sie weist im Anschluss an ihre Mitnahmeschulter 35 einen Abschnitt 44 auf, über den sich die an den beiden einander gegenüber liegenden Seiten ausgebildeten Abflachungen 45, 46 bis zum stirnseitigen, der Druckfeder 43 zugewandten Ende der Betätigungsstange 39 erstrecken. Die Abflachungen 45, 46 erstrecken sich mit Spiel durch den Keil 31, sodass nach Entnahme der Schraube 42 die Betätigungsstange 30 aus der Spannplatte 12 herausgezogen werden kann. Sie kann somit bedarfsweise durch eine Betätigungsstange 30 nach Figur 8 ersetzt werden, die erheblich länger ist und somit etwa der Bohrung 29 heraus ragt. Sie kann dabei etwa um das Maß der Schraube 42 aus der Bohrung 29 heraus ragen.

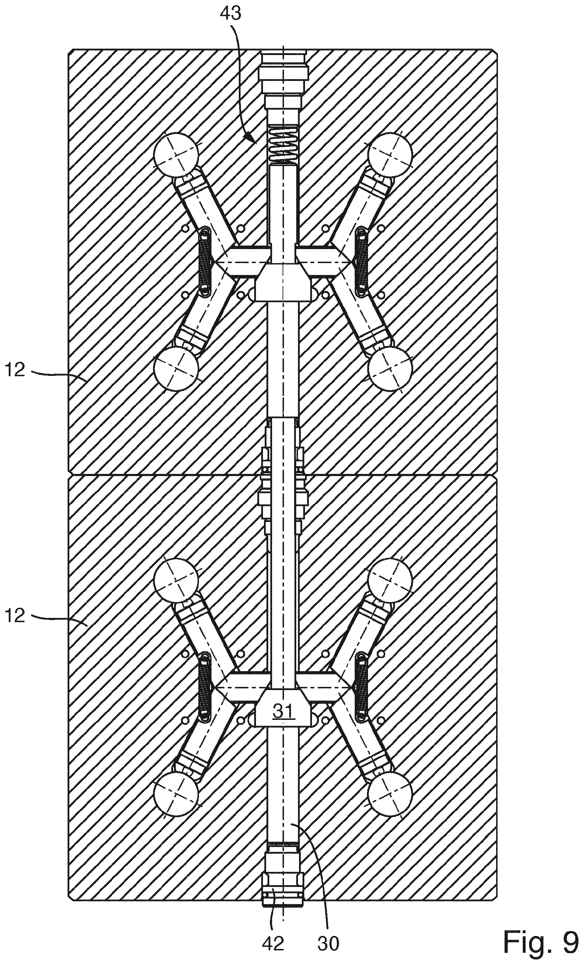

Wie in Figur 9 veranschaulicht kann eine solche Spannplatte 12, die gemäß Figur 8 mit einer verlängerten Betätigungsstange 30 versehen ist, mit einer anderen Spannplatte 12 kombiniert werden, bei der zuvor die Schraube 42 entfernt worden ist. Auf diese Weise lassen sich mit Spannplatten 12 gemäß Figur 7 oder 8 auf besonders einfache Weise größere Spannfelder aufbauen. Dabei können auch mehr als zwei Spannplatten 12 in einer Reihe angeordnet und mehr als zwei Festzieheinrichtungen 28 von einer Schraube 42 betätigt werden.

Die erfindungsgemäße Spannplatte 12 weist eine Festzieheinrichtung 28 auf, die ein Keilgetriebe umfasst. Zu diesem gehört als Antrieb für Spannschieber 23 bis 26 ein z.B. mittels einer Betätigungsstange linear verschiebbarer Keil 31, der in der Spannplatte 12 an zwei Gleitflächen 33, 34 seitlich geführt und abgestützt ist. Die Gleitflächen 33, 34 dienen dabei dazu, bei unsymmetrischer Belastung der Festzieheinrichtung 28 auf den Keil 31 einwirkende Seitenkräfte aufzunehmen und abzuleiten.

Dieses Konzept ermöglicht einen flexibleren Einsatz der Spannplatten 12.

Bezugszeichen:
- 10: Einrichtung
- 11: Werkstückspanneinrichtung
- 12, 13: Spannplatten
- 14 - 17: Öffnungen
- 18: Spannbolzen
- 19: Führungskörper
- 20, 21: Spannbacken
- 22: Kopf
- 23 - 26: Spannschieber
- 27: Oberseite / Bezugsebene
- 28: Festzieheinrichtung
- 29: Bohrung
- 30: Betätigungsstange
- 31: Keil
- 32: Axialrichtung
- 33, 34: Gleitflächen
- 35: Mitnahmeschulter
- α: Winkel
- 36, 37: Keilflächen des Keils 31
- 36a, 37a: Lagerflächen des Keils 31
- 38, 39: Schieber
- 38a, 38b: Druckflächen an der Nase des Schiebers 38
- 39a, 39b: Druckflächen an der Nase des Schiebers 39
- 40, 41: Federmittel
- 42: Schraube
- 43: Druckfeder
- 44: Abschnitt
- 45, 46: Seitenflächen / Abflachungen

## Patentansprüche

1. Einrichtung (10) zur Aufnahme einer Werkstückspanneinrichtung (11) mit mehreren Spann- und Positionierbolzen (18), wobei die Einrichtung (10) aufweist:
eine Spannplatte (12), die eine ebene Oberseite (27) aufweist, die mehrere Öffnungen (14, 15, 16, 17) zur Aufnahme von Spann- und Positionierbolzen (18) der Einrichtung (10) aufweist,
eine Festzieheinrichtung (28), die in der Spannplatte (12) angeordnet ist und die von einer axial verschiebbar gelagerten Betätigungsstange (30) angetrieben ist,
wobei die Festzieheinrichtung (28) mindestens zwei Spannschieber (23, 24) aufweist, die zu beiden Seiten der Betätigungsstange (30) angeordnet sind,
mit einem auf der Betätigungsstange (30) angeordneten Keil (31), der in der Spannplatte (12) geführt ist.

2. Einrichtung nach Anspruch 1, **dadurch gekennzeichnet, dass** die beiden Spannschieber (23, 24) jeweils in eine Spannposition überführbar sind, in der sie mit einem Ende in eine der Öffnungen (14, 15) ragen, und dass die beiden Spannschieber (23, 24) jeweils in eine Freigabeposition überführbar sind, in der sie mit dem Ende außerhalb der Öffnungen (14, 15) stehen.

3. Einrichtung nach einem der vorstehenden Ansprüche, **dadurch gekennzeichnet, dass** die Betätigungsstange (30) mit den Spannschiebern (23, 24) in Antriebsverbindung steht.

4. Einrichtung nach einem der vorstehenden Ansprüche, **dadurch gekennzeichnet, dass** die Betätigungsstange (30) mit den Spannschiebern (23, 24) über ein Keilgetriebe in Antriebsverbindung stehen.

5. Einrichtung nach Anspruch 4, **dadurch gekennzeichnet, dass** zu dem Keilgetriebe der auf der Betätigungsstange (30) angeordnete Keil (31) und zwei zueinander symmetrisch angeordnete, mit dem Keil (31) in Anlage stehende Schieber (38, 39) gehören.

6. Einrichtung nach Anspruch 5, **dadurch gekennzeichnet, dass** jeweils ein Schieber (38, 39) einem der Spannschieber (23, 24) in Antriebsverbindung steht.

7. Einrichtung nach einem der vorstehenden Ansprüche, **dadurch gekennzeichnet, dass** der Keil (31) zwei miteinander einen Winkel einschließende Keilflächen (36, 37) aufweist, die mit der Axialrichtung (32) der Betätigungsstange (30) jeweils gleiche Winkel (α) einschließen.

8. Einrichtung nach einem der vorstehenden Ansprüche, **dadurch gekennzeichnet, dass** die beiden Keilflächen (38, 39) miteinander einen spitzen Winkel (2α) einschließen.

9. Einrichtung nach einem der vorstehenden Ansprüche, **dadurch gekennzeichnet, dass** die Betätigungsstange (30) Teil eines Untersetzungsgetriebes ist, dessen Abtrieb von den Spannschiebern (23, 24) gebildet ist.

10. Einrichtung nach einem der vorstehenden Ansprüche, **dadurch gekennzeichnet, dass** der Keil (31) auf der Betätigungsstange (30) mit seitlichem Spiel gehalten ist.

11. Einrichtung nach einem der vorstehenden Ansprüche, **dadurch gekennzeichnet, dass** die Betätigungsstange (30) in der Spannplatte (12) mit seitlichem Spiel gehalten ist.

12. Einrichtung nach einem der vorstehenden Ansprüche, **dadurch gekennzeichnet, dass** der Keil (31) in der Spannplatte (12) mit einem seitlichen Spiel geführt ist, das geringer ist, als die Summe aus dem seitlichen Spiel der Betätigungsstange (30) in der Spannplatte (12) und dem seitlichen Spiel der Betätigungsstange (30) in dem Keil (31).

13. Einrichtung nach einem der vorstehenden Ansprüche, **dadurch gekennzeichnet, dass** den Spannschiebern (23, 24) Federmittel (40, 41) zugeordnet sind, die jeden Spannschieber (23, 24) in einer Richtung radial aus der Öffnung (14, 15) heraus vorspannen.

14. Einrichtung nach einem der vorstehenden Ansprüche, **dadurch gekennzeichnet, dass** jedem Schieber (38, 39) zwei gegensinnig arbeitende Spannschieber (23, 25; 24, 26) zugeordnet sind.

15. Einrichtung nach einem der vorstehenden Ansprüche, **dadurch gekennzeichnet, dass** die Betätigungsstange (30) seitliche Abflachungen (45, 46) zur Aufnahme des Keils (31) aufweist.
